# FASCICULE DE BREVET EUROPEEN

(11) **EP 3 172 089 B1**
(45) Date de publication et mention de la délivrance du brevet: **01.08.2018**
(21) Numéro de dépôt: 15742338.5
(22) Date de dépôt: 24.06.2015
(51) Int. Cl.: B60R 21/207

(54) **DISPOSITIF DE SÉCURITÉ À PIÈCE D'INTERFACE POSITIONNÉE PAR RAPPORT AU BOÎTIER À SAC GONFLABLE, POUR UN SIÈGE DE VÉHICULE**
SICHERHEITSVORRICHTUNG MIT EINEM SCHNITTSTELLENTEIL, DER IN BEZUG AUF DAS AIRBAGGEHÄUSE POSITIONIERT IST, FÜR EINEN FAHRZEUGSITZ
SAFETY DEVICE HAVING AN INTERFACE PART POSITIONED WITH RESPECT TO THE AIRBAG HOUSING, FOR A VEHICLE SEAT

(30) Priorité: 23.07.2014 FR 1457103
(43) Date de publication de la demande: 31.05.2017
(73) Titulaire: PSA Automobiles SA, 78300 Poissy (FR); Autoliv Development AB, 447 83 Vårgårda (SE)
(72) Inventeur: FOMPERINE, Stephan, F-94440 Villecresnes (FR); POLO, Alexandra, F-78730 Rochefort en Yvelines (FR); VERCAYGNE-BAT, Guy Noel, F-78370 Plaisir (FR); HOUARD, Mathieu, F-76550 Aubermesnil Beaumais (FR)
(86) Numéro de dépôt international: PCT/FR2015/051702
(87) Numéro de publication internationale: WO 2016/012680

(56) Documents cités:
- US-A- 5 542 691
- US-A- 5 799 970
- US-A- 5 951 039
- US-A1- 2004 239 081

## Description

L'invention concerne les sièges de véhicule, et plus précisément les dispositifs de sécurité à sac gonflable (ou « airbag ») qui équipent les armatures de dossier de certains sièges de véhicule.

Comme le sait l'homme de l'art, certains sièges de véhicule, éventuellement de type automobile, comprennent une armature de dossier équipée sur un côté d'un dispositif de sécurité à sac gonflable (ou « airbag ») apparent.

Un tel dispositif de sécurité comprend une pièce d'interface (parfois appelée boîte de garnissage) munie d'un logement, et un boîtier comprenant un sac gonflable et ses moyens de gonflage, couplé très étroitement à cette pièce d'interface dans son logement et propre à être solidarisé fixement à une armature d'un dossier de siège. La pièce d'interface est tout d'abord couplée à l'armature grâce à des moyens de clippage qu'elle comprend. Puis, une pièce de support, comprenant un logement pour la pièce d'interface, est solidarisée à l'armature en intégrant dans son logement la pièce d'interface. Ensuite, une pièce d'habillage (généralement en tissu ou en cuir), comprenant un logement pour la pièce d'interface, est solidarisée à l'armature devant la pièce de support en laissant apparente la pièce d'interface au niveau de son logement. Enfin, le boîtier à sac gonflable est introduit très étroitement dans le logement de la pièce d'interface, puis solidarisé fixement à l'armature grâce à au moins une vis jusqu'à ce que le bord périphérique de son couvercle plaque très fortement (en le pinçant) le bord du logement de la pièce d'habillage contre le bord périphérique du logement de la pièce d'interface.

Ce mode de réalisation nécessite que le logement de la pièce d'interface soit parfaitement adapté au boîtier à sac gonflable qu'il doit accueillir, afin que ce dernier soit bien positionné par rapport à l'armature, que les vibrations du véhicule n'induisent pas des micro-déplacements bruyants du boîtier par rapport à la pièce d'interface, et que n'apparaisse aucun pli ou bombement anormal de la pièce d'habillage, nuisible à l'impression visuelle de qualité. Pour obtenir un tel résultat, on est contraint de passer beaucoup de temps simplement à concevoir la pièce d'interface et le boîtier à sac gonflable, ce qui augmente significativement leur coût. En outre, en raison des dispersions dimensionnelles de fabrication, l'adaptation parfaite n'est pas systématiquement garantie. Le document US5799970 révèle un siège de véhicule selon le préambule de la revendication 1. L'invention a donc pour but d'améliorer la situation.

Elle propose notamment à cet effet un siège de véhicule avec les caractéristiques de la revendication 1. Ainsi, contrairement à ce qui se passe dans un siège comprenant un dispositif de sécurité de l'art antérieur, ce n'est plus la pièce d'interface qui « pilote » le positionnement du boîtier par rapport à son logement, mais c'est le boîtier qui « pilote » le positionnement de la pièce d'interface par rapport à lui. Cela permet d'avoir une plus grande tolérance de fabrication de la pièce d'interface et du boîtier, et donc une réduction de la durée de leur phase de conception.

Le siège selon l'invention peut comporter d'autres caractéristiques qui peuvent être prises séparément ou en combinaison, et notamment :
- les premier et deuxième moyens de positionnement peuvent être définis respectivement dans des parties supérieure et inférieure de la pièce d'interface, et les troisième et quatrième moyens de positionnement peuvent être définis respectivement dans des parties supérieure et inférieure du boîtier ;
- le premier moyen de positionnement peut être un pion, et le troisième moyen de positionnement peut être un logement propre à loger une partie du pion ;
   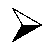 le logement peut comprendre deux zones planes placées sensiblement l'une en face de l'autre et propres à empêcher un entraînement en rotation de la pièce d'interface par rapport au boîtier ;
- le deuxième moyen de positionnement peut être une patte définissant une butée d'appui, et le quatrième moyen de positionnement peut être une zone qui est conformée de manière à s'appuyer contre cette patte ;
- la face arrière du boîtier peut être munie de deux vis propres à être introduites respectivement dans deux trous correspondant de l'armature et à coopérer avec deux écrous pour solidariser fixement le boîtier et la pièce d'interface à l'armature ;
- la face arrière de la pièce d'interface peut être munie de nervures définissant des godrons d'ajustement de position suivant une direction transversale.

L'invention propose également un véhicule, éventuellement de type automobile, et comprenant au moins un siège du type de celui présenté ci-avant.

D'autres caractéristiques et avantages de l'invention apparaîtront à l'examen de la description détaillée ci-après, et des dessins annexés (obtenus en CAO/DAO, d'où le caractère apparemment discontinu de certaines lignes), sur lesquels :
- la figure 1 illustre schématiquement, dans une vue en perspective, les constituants d'un dispositif de sécurité selon l'invention avant leur assemblage à une armature d'un dossier de siège, à une pièce de support et à une pièce d'habillage,
- la figure 2 illustre schématiquement, dans une vue en perspective du côté avant, la pièce d'interface du dispositif de sécurité de la figure 1,
- la figure 3 illustre schématiquement, dans une vue en perspective du côté arrière, la pièce d'interface du dispositif de sécurité de la figure 1,
- la figure 4 illustre schématiquement, dans une vue en perspective du côté arrière, le réceptacle et le couvercle du boîtier à sac gonflable du dispositif de sécurité de la figure 1, avant qu'ils ne soient assemblés l'un à l'autre,
- la figure 5 illustre schématiquement, dans une vue du dessus, un exemple de troisième moyen de positionnement du boîtier à sac gonflable du dispositif de sécurité de la figure 1,
- la figure 6 illustre schématiquement, dans une vue en perspective du côté arrière, un exemple de quatrième moyen de positionnement du boîtier à sac gonflable du dispositif de sécurité de la figure 1,
- la figure 7 illustre schématiquement, dans une vue en perspective du côté arrière, une partie de l'armature de dossier de la figure 1,
- la figure 8 illustre schématiquement, dans une vue en perspective du côté arrière, le dispositif de sécurité de la figure 1 une fois ses constituants assemblés à une armature d'un dossier de siège, et
- la figure 9 illustre schématiquement, dans une vue en perspective du côté avant, le dispositif de sécurité de la figure 1 une fois ses constituants assemblés à une armature d'un dossier de siège, à une pièce de support et à une pièce d'habillage.

L'invention a notamment pour but de proposer un dispositif de sécurité DS destiné à équiper un siège de véhicule.

On considère dans ce qui suit, à titre d'exemple non limitatif, que le siège est destiné à équiper un véhicule de type automobile, comme par exemple une voiture. Mais l'invention n'est pas limitée à ce type de véhicule. Elle concerne en effet tout véhicule comportant au moins une surface sur laquelle peut être installé au moins un siège. Par conséquent, elle concerne les véhicules terrestres, les véhicules maritimes (ou fluviaux) et les aéronefs.

Par ailleurs, on considère dans ce qui suit, à titre d'exemple non limitatif, que le siège est de type monoplace. Mais l'invention n'est pas limitée à ce type de siège. Elle concerne en effet tout type de siège pouvant accueillir, en position assise, au moins une personne. Par conséquent, il pourra également s'agir d'une banquette comportant au moins un dossier.

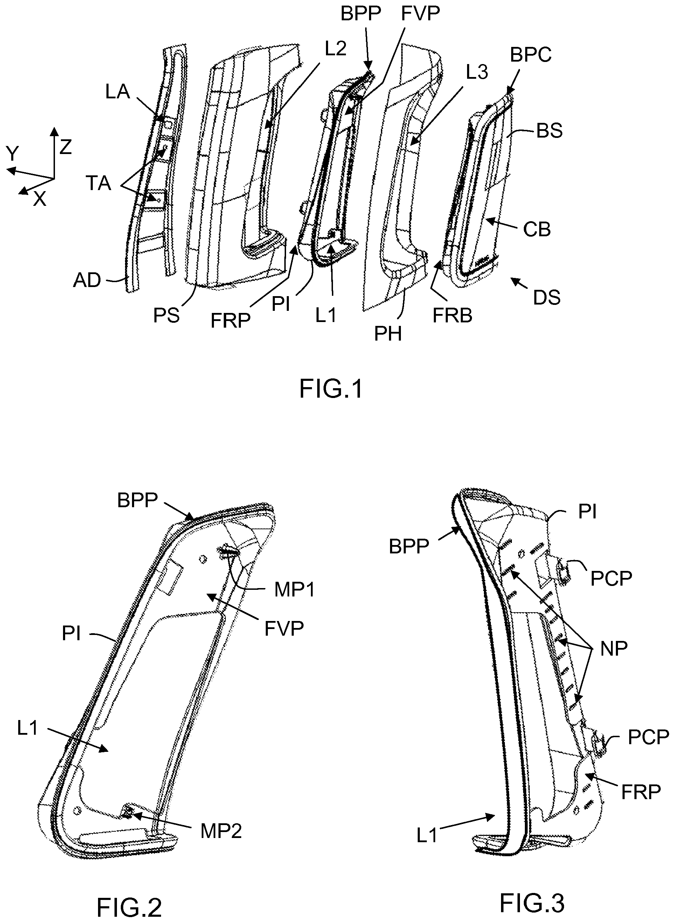

On a schématiquement illustré sur la figure 1 les constituants (pièce d'interface PI et boîtier à sac gonflable BS) d'un dispositif de sécurité DS selon l'invention, avant qu'ils ne soient assemblés à une armature AD d'un dossier de siège de véhicule, à une pièce de support PS et à une pièce d'habillage PH.

Sur cette figure 1, la direction X est la direction longitudinale du véhicule (et donc du siège), laquelle est sensiblement parallèle aux côtés latéraux comportant les portières latérales, la direction Y est la direction transversale du véhicule, laquelle est perpendiculaire à la direction X, et la direction Z est la direction verticale du véhicule, laquelle est perpendiculaire aux directions longitudinale X et transversale Y.

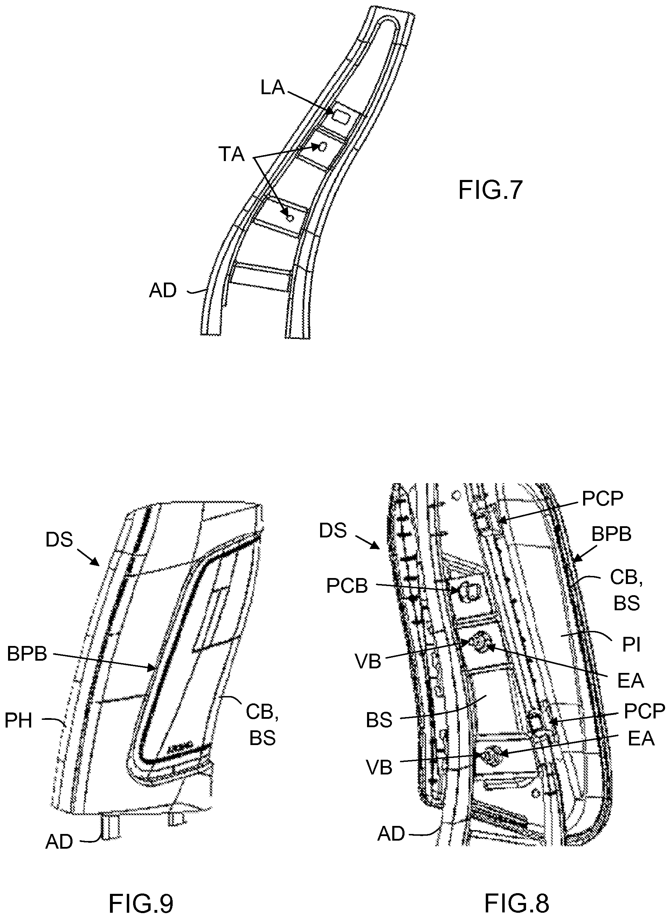

L'armature de dossier AD (illustrée très partiellement sur les figures 1 et 7) est destinée à faire partie d'un dossier d'un siège de véhicule avec un garnissage de dossier et une housse comprenant éventuellement la pièce d'habillage PH précitée. Cette armature de dossier AD est par ailleurs destinée à être couplée, éventuellement à rotation, à une armature d'une assise de ce même siège. Cette assise comprend également un garnissage d'assise solidarisé à son armature d'assise et une éventuelle housse entourant ce garnissage. Par ailleurs, cette assise est par exemple destinée à être montée indirectement (via des piètements et/ou des glissières) sur un plancher d'un véhicule.

La pièce de support PS est destinée à être solidarisée à l'armature de dossier AD et à servir de support à la pièce d'habillage PH. Elle peut se présenter sous la forme d'une coque en matière plastique ou synthétique ou d'un garnissage en mousse synthétique. Par ailleurs, elle (PS) comprend un logement L2 destiné à permettre le passage et le logement (étroits) de la pièce d'interface PI du dispositif de sécurité DS.

La pièce d'habillage PH est destinée à être solidarisée dans un état tendu à l'armature de dossier AD, en étant plaquée contre la face externe de la pièce de support PS devant un bord périphérique BPP de la pièce d'interface PI. Elle est généralement en tissu ou en cuir. Par ailleurs, elle (PH) comprend un logement L3 destiné à permettre le passage (étroit) d'un réceptacle RB du boîtier à sac gonflable BS du dispositif de sécurité DS.

Comme illustré sur les figures 1 à 3, une pièce d'interface PI d'un dispositif de sécurité DS selon l'invention, comprend une paroi qui délimite un logement L1 destiné à loger une partie du réceptacle RB du boîtier à sac gonflable BS. Cette paroi comprend une face arrière FRP et une face avant FVP, opposées l'une à l'autre. La partie avant du logement L1 est délimitée par un bord périphérique BPP destiné à coopérer étroitement avec un bord périphérique BPB du boîtier BS pour pincer fortement la pièce d'habillage PH à la périphérie de son logement L3.

Comme illustré sur la figure 3, la face arrière FRP, qui est destinée à être orientée vers l'armature de dossier AD, est munie d'au moins une patte de clippage PCP propre à être clippée sur une partie adaptée à cet effet de l'armature de dossier AD pour assurer son pré-maintien au début de son assemblage à cette dernière (AD).

On notera que dans l'exemple illustré non limitativement sur la figure 3 la face arrière FRP est munie de deux pattes de clippage PCP espacées l'une de l'autre suivant la direction verticale Z, et destinées à être clippées sur la partie adaptée de l'armature de dossier AD en deux endroits distincts, ici d'un même « montant ».

Comme illustré sur la figure 2, la face avant FVP, qui est destinée à être orientée vers la face arrière FRB du réceptacle RB du boîtier à sac gonflable BS, est munie en deux endroits distants de premier MP1 et deuxième MP2 moyens de positionnement, sur lesquels on reviendra plus loin.

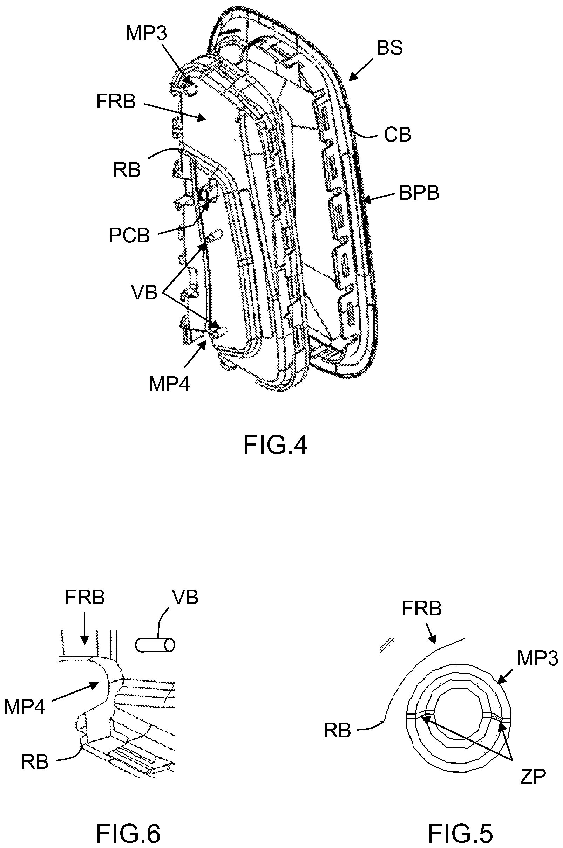

Comme illustré sur les figures 1 et 4, un boîtier (à sac gonflable) BS d'un dispositif de sécurité DS selon l'invention, comprend un réceptacle RB logeant un sac gonflable et ses moyens de gonflage, et un couvercle CB muni d'un bord périphérique BPB. Comme illustré non limitativement, la solidarisation du couvercle CB au réceptacle RB peut, par exemple, se faire grâce à des moyens de clippage définis sur ces derniers (CB et RB) et coopérant ensemble.

Le réceptacle RB comprend une face arrière FRB destinée à être placée en regard de la face avant FVP de la pièce d'interface PI. Cette face arrière FRB est munie, d'une part, de troisième MP3 et quatrième MP4 moyens de positionnement qui sont propres à coopérer respectivement avec les premier MP1 et deuxième MP2 moyens de positionnement pour positionner précisément leur pièce d'interface PI par rapport au boîtier BS, et, d'autre part, d'au moins une vis VB qui est propre à assurer une solidarisation fixe du boîtier BS et de la pièce d'interface PI à l'armature de dossier AD.

On notera que dans l'exemple non limitatif illustré sur les figures 4 et 8, la face arrière FRB du boîtier B est munie de deux vis VB propres à être introduites respectivement dans deux trous TA correspondant de l'armature de dossier AD et à coopérer avec deux écrous EA pour solidariser fixement le boîtier BS et la pièce d'interface PI à l'armature de dossier AD (voir figures 7 et 8). Mais dans des variantes de réalisation elle (FRB) pourrait ne comporter qu'une unique vis VB ou bien plus de deux vis VB (par exemple trois).

On comprendra qu'une fois que la pièce d'interface PI a été couplée (par clippage de ses pattes PCP) à l'armature de dossier AD, elle peut être automatiquement positionnée avec précision par rapport au boîtier BS du fait de la coopération des moyens de positionnement MP1 à MP4 par paires, et la solidarisation fixe du boîtier BS en des endroits prédéfinis (TA) de l'armature de dossier AD, via ses vis VB, fige ce positionnement précis par rapport à l'armature de dossier AD. Contrairement à ce qui se passe dans un dispositif de sécurité de l'art antérieur, ici ce n'est donc plus la pièce d'interface PI qui « pilote » le positionnement du boîtier BS par rapport à son logement L1, mais c'est le boîtier BS qui « pilote » le positionnement de la pièce d'interface PI par rapport à lui. Il en résulte notamment une plus grande tolérance de fabrication de la pièce d'interface PI et du boîtier BS, et donc une réduction de la durée de leur phase de conception.

Les moyens de positionnement MP1 à MP4 peuvent être définis en différents endroits, dès lors que ces derniers sont distants l'un de l'autre afin de conditionner le positionnement suivant deux directions de l'espace X et Z. Ainsi, comme illustré non limitativement sur les figures 2 et 4 à 6, les premier MP1 et deuxième MP2 moyens de positionnement peuvent être définis respectivement dans des parties supérieure et inférieure de la pièce d'interface PI. Dans ce cas, les troisième MP3 et quatrième MP4 moyens de positionnement sont définis respectivement dans des parties supérieure et inférieure du boîtier BS. Ces positionnements peuvent être décalés l'un par rapport à l'autre non seulement suivant la direction verticale Z, mais également suivant la direction longitudinale X. Mais cela n'est pas obligatoire, car ce qui est important c'est que l'iso-statisme soit respecté.

Par ailleurs, les moyens de positionnement MP1 à MP4 peuvent se présenter sous différentes formes, et notamment comme illustré non limitativement sur les figures 2 et 4 à 6. Dans cet exemple illustré, le premier moyen de positionnement MP1 est un pion, et le troisième moyen de positionnement MP3 est un logement qui est propre à loger une partie de ce pion MP1.

Par exemple, et comme illustré non limitativement sur les figures 2, 4 et 5, le pion MP1 peut présenter une forme générale conique ou tronconique, et le logement MP3 peut comprendre deux zones planes ZP placées sensiblement l'une en face de l'autre et propres à bloquer le pion MP1 afin d'empêcher un entraînement en rotation (autour de Y) de la pièce d'interface PI par rapport au boîtier BS.

La hauteur du pion MP1 est choisie de sorte que le positionnement de la pièce d'interface PI par rapport au boîtier BS via le logement MP3 soit effectif avant même que l'ensemble (PI + BS) soit complètement bridé. Par ailleurs, la forme conique du pion MP1 facilite son engagement dans le logement MP3 lors de l'assemblage.

Par ailleurs, dans l'exemple illustré, le deuxième moyen de positionnement MP2 est une patte qui définit une butée d'appui, et le quatrième moyen de positionnement MP4 est une zone de la paroi du réceptacle RB qui est conformée de manière à s'appuyer contre cette patte MP2, comme illustré sur la figure 6. Ici, la zone MP4 est un dégagement défini dans la paroi du réceptacle RB, situé dans la partie inférieure de ce dernier (RB), et assurant un calage suivant la direction longitudinale X. La patte MP4 peut avantageusement comprendre un plan incliné de manière à faciliter la mise en place.

On notera que pour faciliter la phase de solidarisation du boîtier BS et de la pièce d'interface PI à l'armature de dossier AD, il est avantageux, comme illustré non limitativement sur les figures 4 et 8, que la face arrière FRB du boîtier BS soit munie d'une patte de clippage PCB propre à être clippée dans un logement LA de l'armature de dossier AD pour assurer son pré-maintien. Ce clippage permet au technicien qui procède à l'assemblage de lâcher le boîtier BS et la pièce d'interface PI afin de procéder au vissage des écrous EA sur les vis VB du boîtier BS.

On notera également, comme illustré non limitativement sur la figure 2, que la face arrière FRP de la pièce d'interface PI peut être avantageusement munie de nervures NP qui définissent des godrons d'ajustement de position suivant la direction transversale Y. Cela permet en effet d'assurer un excellent plaquage de la face arrière FRP de la pièce d'interface PI contre les zones d'appui de l'armature de dossier AD.

Pour assembler le dispositif de sécurité DS à l'armature de dossier AD, on peut, par exemple, procéder comme indiqué ci-après. Tout d'abord, on peut commencer par solidariser une pièce de support PS à l'armature de dossier AD, puis on peut coupler la pièce d'interface PI à la pièce de support PS (en la logeant dans le logement L2) et à l'armature de dossier AD grâce à chaque patte de clippage PCP qu'elle comprend.

Ensuite, on peut solidariser une pièce d'habillage PH à l'armature de dossier AD devant la pièce de support PS, en prenant soin de laisser apparente la pièce d'interface PI au niveau de son logement L3. Puis, le boîtier BS (ou au moins son réceptacle RB) peut être introduit dans le logement L1 de la pièce d'interface PI jusqu'à ce que les moyens de positionnement MP1 à MP4 coopèrent ensemble par paires, de manière à positionner précisément la pièce d'interface PI par rapport au boîtier BS. Puis, on peut introduire les vis VB dans les trous TA de l'armature de dossier AD et clipper la patte de clippage PCB dans le logement LA de l'armature de dossier AD pour assurer le pré-maintien. Enfin, on peut visser les écrous EA sur les vis VB jusqu'à ce que le bord périphérique BPB du couvercle CB du boîtier BS plaque très fortement (en le pinçant) le bord du logement L3 de la pièce d'habillage PH contre le bord périphérique BPP du logement L1 de la pièce d'interface PI (voir figure 9).

Cette dernière opération de vissage vient éliminer les jeux entre les différents constituants. Il en résulte une suppression, d'une part, du mouvement transversal (suivant Y) de la pièce d'interface PI par rapport à l'armature de dossier AD, notamment du fait du plaquage des godrons NP et du pincement de la pièce d'habillage PH entre les bords périphériques (fonctionnels) BPP et BPB, et, d'autre part, du mouvement vertical (suivant Z) de la pièce d'interface PI du fait de sa mise en contrainte avec la forme du boîtier BS, via le pincement de la pièce d'habillage PH.

## Revendications

1. Siège de véhicule comprenant un dossier muni d'une armature (AD), et au moins un dispositif de sécurité (DS), ledit dispositif (DS) comprenant une pièce d'interface (PI) et un boîtier (BS) à sac gonflable couplé à ladite pièce d'interface (PI) , **caractérisé en ce que** ladite pièce d'interface (PI) comprend une face arrière (FRP), munie d'au moins une patte de clippage (PCP) clippée sur une partie adaptée de ladite armature (AD) assurant un pré-maintien, et une face avant (FVP), munie en deux endroits distants de premier (MP1) et deuxième (MP2) moyens de positionnement, et **en ce que** ledit boîtier (BS) comprend une face arrière (FRB) munie de troisième (MP3) et quatrième (MP4) moyens de positionnement, coopérant respectivement avec lesdits premier (MP1) et deuxième (MP2) moyens de positionnement pour positionner précisément ladite pièce d'interface (PI) par rapport audit boîtier (BS), ladite face arrière (FRB) du boîtier (BS) étant munie d'une patte de clippage (PCB) qui est clippée dans un logement (LA) de ladite armature (AD) assurant son pré-maintien, et au moins une vis (VB) assurant une solidarisation fixe desdits boîtier (BS) et pièce d'interface (PI) à ladite armature (AD).

2. Siège selon la revendication 1, **caractérisé en ce que** lesdits premier (MP1) et deuxième (MP2) moyens de positionnement sont définis respectivement dans des parties supérieure et inférieure de ladite pièce d'interface (PI), et lesdits troisième (MP3) et quatrième (MP4) moyens de positionnement sont définis respectivement dans des parties supérieure et inférieure dudit boîtier (BS).

3. Siège selon l'une des revendications 1 et 2, **caractérisé en ce que** ledit premier moyen de positionnement (MP1) est un pion, et ledit troisième moyen de positionnement (MP3) est un logement propre à loger une partie dudit pion (MP1).

4. Siège selon la revendication 3, **caractérisé en ce que** ledit logement (MP3) comprend deux zones planes (ZP) placées sensiblement l'une en face de l'autre et propres à empêcher un entraînement en rotation de ladite pièce d'interface (PI) par rapport audit boîtier (BS).

5. Siège selon l'une des revendications 1 à 4, **caractérisé en ce que** ledit deuxième moyen de positionnement (MP2) est une patte définissant une butée d'appui, et ledit quatrième moyen de positionnement (MP4) est une zone conformée de manière à s'appuyer contre ladite patte (MP2).

6. Siège selon l'une des revendications 1 à 5, **caractérisé en ce que** ladite face arrière (FRB) du boîtier (BS) est munie de deux vis (VB) propres à être introduites respectivement dans deux trous (TA) correspondant de ladite armature (AD) et à coopérer avec deux écrous (EA) pour solidariser fixement ledit boîtier (BS) et ladite pièce d'interface (PI) à ladite armature (AD).

7. Siège selon l'une des revendications 1 à 6, **caractérisé en ce que** ladite face arrière (FRP) de la pièce d'interface (PI) est munie de nervures (NP) définissant des godrons d'ajustement de position suivant une direction transversale.

8. Véhicule, **caractérisé en ce qu'**il comprend au moins un siège selon l'une des revendications 1 à 7.

## Patentansprüche

1. Fahrzeugsitz, der eine Rückenlehne umfasst, die mit einer Bewehrung (AD) und mindestens einer Sicherheitsvorrichtung (DS) versehen ist, wobei die Vorrichtung (DS) ein Schnittstellenteil (PI) und ein Gehäuse (BS) mit Airbag umfasst, das mit dem Schnittstellenteil (PI) gekoppelt ist, **dadurch gekennzeichnet, dass** das Schnittstellenteil (PI) eine Rückseitenfläche (FRP), die mit mindestens einer Clipspratze (PCP) versehen ist, die auf einen angepassten Teil der Bewehrung (AD) geclipst ist, der ein Vorabhalten sicherstellt, und eine Vorderseitenfläche (FVP), die an zwei beabstandeten Stellen mit einem ersten (MP1) und einem zweiten (MP2) Positionierungsmittel versehen ist, umfasst, und dass das Gehäuse (BS) eine Rückseitenfläche (FRB) umfasst, die mit einem dritten (MP3) und vierten (MP4) Positionierungsmittel versehen ist, die jeweils mit dem ersten (MP1) und zweiten (MP2) Positionierungsmittel zusammenwirken, um das Schnittstellenteil (PI) in Bezug auf das Gehäuse (BS) präzise zu positionieren, wobei die Rückseitenfläche (FRB) des Gehäuses (BS) mit einer Clipspratze (PCP) versehen ist, die in eine Aufnahme (LA) der Bewehrung (AD), die ihr Vorabhalten sicherstellt, geclipst ist, und mindestens eine Schraube (VB), die eine stationäre feste Verbindung des Gehäuses (BS) und des Schnittstellenteils (PI) an der Bewehrung (AD) sicherstellt.

2. Sitz nach Anspruch 1, **dadurch gekennzeichnet, dass** das erste (MP1) und das zweite (MP2) Positionierungsmittel jeweils in dem oberen und unteren Teil des Schnittstellenteils (PI) definiert sind, und das dritte (MP3) und das vierte (MP4) Positionierungsmittel jeweils in dem oberen und unteren Teil des Gehäuses (BS) definiert sind.

3. Sitz nach einem der Ansprüche 1 und 2, **dadurch gekennzeichnet, dass** das erste Positionierungsmittel (MP1) ein Zapfen ist, und dass das dritte Positionierungsmittel (MP3) eine Aufnahme ist, die geeignet ist, um einen Teil des Zapfens (MP1) unterzubringen.

4. Sitz nach Anspruch 3, **dadurch gekennzeichnet, dass** die Aufnahme (MP3) zwei flache Zonen (ZP) umfasst, die im Wesentlichen eine gegenüber der anderen platziert und geeignet sind, ein Antreiben in Drehung des Schnittstellenteils (PI) in Bezug auf das Gehäuse (BS) zu verhindern.

5. Sitz nach einem der Ansprüche 1 bis 4, **dadurch gekennzeichnet, dass** das zweite Positionierungsmittel (MP2) eine Pratze ist, die eine Anschlagauflage definiert, wobei das vierte Positionierungsmittel (MP4) eine Zone ist, die derart gestaltet ist, dass sie sich gegen die Pratze (MP2) legt.

6. Sitz nach einem der Ansprüche 1 bis 5, **dadurch gekennzeichnet, dass** die Rückseitenfläche (FRB) des Gehäuses (BS) mit zwei Schrauben (VB) versehen ist, die geeignet sind, um jeweils in zwei entsprechende Bohrungen (TA) der Bewehrung (AD) eingeführt zu werden und mit zwei Muttern (EA) zusammenzuwirken, um das Gehäuse (BS) und das Schnittstellenteil (PI) an der Bewehrung (AD) stationär zu befestigen.

7. Sitz nach einem der Ansprüche 1 bis 6, **dadurch gekennzeichnet, dass** die Rückseitenfläche (FRP) des Schnittstellenteils (PI) mit Rippen (NP) versehen ist, die Godronen zum Positionseinstellen entlang einer Querrichtung definieren.

8. Fahrzeug, **dadurch gekennzeichnet, dass** es mindestens einen Sitz nach einem der Ansprüche 1 bis 7 umfasst.

## Claims

1. A vehicle seat including a backrest provided with a framework (AD) and at least one safety device (DS), said device (DS) including an interface part (PI) and an airbag housing (BS) coupled to said interface part (PI), **characterized in that** said interface part (PI) includes a rear face (FRP), provided with at least one clip-fastening lug (PCP) clip-fastened to a suitable part of said framework (AD) ensuring a pre-hold, and a front face (FVP), provided at two distant locations with first (MP1) and second (MP2) positioning means, and **in that** said housing (BS) includes a rear face (FRB) provided with third (MP3) and fourth (MP4) positioning means, cooperating respectively with said first (MP1) and second (MP2) positioning means for precisely positioning said interface part (PI) with respect to said housing (BS), said rear face (FRB) of the housing (BS) being provided with a clip-fastening lug (PCB) which is clip-fastened in a housing (LA) of said framework (AD) ensuring its pre-hold, and at least one screw (VB) ensuring a fixed securing of said housing (BS) and interface part (PI) to said framework (AD) .

2. The seat according to Claim 1, **characterized in that** said first (MP1) and second (MP2) positioning means are defined respectively in upper and lower parts of said interface part (PI), and said third (MP3) and fourth (MP4) positioning means are defined respectively in upper and lower parts of said housing (BS) .

3. The seat according to one of Claims 1 and 2, **characterized in that** said first positioning means (MP1) is a pin, and said third positioning means (MP3) is a housing suitable for housing a portion of said pin (MP1).

4. The seat according to Claim 3, **characterized in that** said housing (MP3) includes two flat zones (ZP) placed substantially one facing the other and suited to preventing an entrainment in rotation of said interface part (PI) with respect to said housing (BS).

5. The seat according to one of Claims 1 to 4, **characterized in that** said second positioning means (MP2) is a lug defining a bearing stop, and said fourth positioning means (MP4) is a zone shaped so as to bear against said lug (MP2).

6. The seat according to one of Claims 1 to 5, **characterized in that** said rear face (FRB) of the housing (BS) is provided with two screws (VB) suitable to be introduced respectively in two corresponding holes (TA) of said framework (AD) and to cooperate with two nuts (EA) to fixedly secure said housing (BS) and said interface part (PI) to said framework (AD).

7. The seat according to one of Claims 1 to 6, **characterized in that** said rear face (FRP) of the interface part (PI) is provided with ribs (NP) defining flutes for position adjustment along a transverse direction.

8. A vehicle, **characterized in that** it includes a least one seat according to one of Claims 1 to 7.
